(19) Europäisches Patentamt

European Patent Office

Office européen des brevets

(11) **EP 1 826 370 A1**

(12) **EUROPEAN PATENT APPLICATION**

(43) Date of publication:
**29.08.2007 Bulletin 2007/35**

(51) Int Cl.:
**F01N 3/022** (2006.01)

(21) Application number: **06027064.2**

(22) Date of filing: **29.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.02.2006 JP 2006047348**
**25.08.2006 WOPCT/JP2006/316748**

(71) Applicant: **IBIDEN CO., LTD.**
**Ogaki**
**Gifu 503-8604 (JP)**

(72) Inventors:
• **Ohno, Kazushige**
**Ibigawa-cho**
**Ibi-gun**
**Gifu 501-0695 (JP)**
• **Kunieda, Masafumi**
**Ibigawa-cho**
**Ibi-gun**
**Gifu 501-0695 (JP)**
• **Ohira, Akihiro**
**Ibigawa-cho**
**Ibi-gun**
**Gifu 501-0695 (JP)**

(74) Representative: **HOFFMANN EITLE**
**Patent- und Rechtsanwälte**
**Arabellastrasse 4**
**81925 München (DE)**

(54) **Honeycomb structure**

(57) A honeycomb structure comprises a porous ceramic which is composed of several cells aligned across a cell wall longitudinally. The cell has either one end sealed. The gas permeability coefficient k of the cell wall is between $0.5~\mu m^2$ and $1.5~\mu m^2$.

**Description**

BACKGROUND OF THE INVENTION

1. Field of the Invention

The present invention relates to a filter which removes particulate matter included in exhaust gas discharged from internal combustion engines such as diesel engines and a honeycomb structure which is used as a catalyst carrier by the filter.

2. Description of the Related Art

Exhaust gas including the particulate matter which mainly has carbon is discharged from vehicles such as buses, trucks and so on; internal combustion engines such as machines for construction; and diesel engines in particular. However, the impacts on the environment and human health caused by the particulate matter have become problems recently. Form example, various compounds are adsorbed in the particulate matter which mainly has carbon, so that the impact on health of the human body by such an adsorbed compounds is a concern.

In such circumstances and based on studies, a filter in which the particulate matter in the exhaust gas is captured so as to purify the exhaust gas, especially a filter with several honeycomb structures composed of porous ceramic is proposed.

For example, several filters comprising honeycomb structures composed of several rectangular-pillar shaped cells that are adjacent across a porous cell wall where each cell elongates longitudinally are proposed. For the honeycomb structure, either end of the cell is sealed with plug for each cell. When the exhaust gas introduced in the honeycomb structure is discharged from the honeycomb structure, the exhaust gas passes through the cell wall. For the filter having such a structure, when the exhaust gas passes though the cell wall, the particulate matter in the exhaust gas is captured (Patent document 1).

Also, in order to convert harmful chemical ingredients such as CO, HC, NOx and so on included in the exhaust gas by means of a catalyst component, after a catalyst carrying layer that is provided on a surface of the cell wall elongates longitudinally in the honeycomb structure, the catalyst is adhered on the catalyst carrying layer. As in the above, such a honeycomb structure is proposed (Patent document 2).

Patent Document 1: JP 2002-219319

Patent Document 2: JP 2002-357114

SUMMARY OF THE INVENTION

However, for the honeycomb structure in which one end of the above cell is sealed, materials composing the honeycomb structure cell wall and characteristics of the structure have great influence on the filter performance. For example, when the pore rate of a cell wall (partition) becomes small, pressure loss of exhaust gas rises. On the other hand, when the pore rate of a cell wall partition becomes big, capture efficiency of particulate matter and the like decreases. Therefore, it is necessary to manage the manufacturing process so that the pore rate of the honeycomb structure is stably controlled to provide good filter performance such as a low pressure loss or high capture efficiency.

However, since the above honeycomb structure is manufactured by firing at high temperature exceeding 2,000 degrees Celsius, for example, it is hard to control the pore rate of the honeycomb structure with high precision. Especially, for the above honeycomb structure having the catalyst carrying layer, when the catalyst carrying layer is provided on the partition, one part of a pore in a cell wall is blocked up and there is a possibility that the pore structure is greatly changed in before and after of the catalyst carrying layer. Therefore, there will be a problem that an important factor determining the filter performance such as a pressure loss and capture efficiency cannot be stably controlled only by management of pore rate and pore diameter of the honeycomb structure.

Therefore, it is a general object of the present invention to provide a honeycomb structure in which the pressure loss and the capture efficiency of particulate matter are maintained in appropriate ranges without the influence of a parameter having the great variation of the pore rate and the pore diameter.

According to one aspect of the present invention, the honeycomb structure comprising the porous ceramic which is composed of several cells aligned across a cell wall longitudinally, the cells in which one end is sealed, and where the gas permeability coefficient k of the cell wall is between 0.5 $\mu m^2$ and 1.5 $\mu m^2$, is provided.

Effect of the invention

For the honeycomb structure which has the gas permeability coefficient k of the cell wall between 0.5 $\mu m^2$ and

1.5 $\mu m^2$, both low pressure loss and high capture efficiency, which are important characteristics for good filter performance, can be satisfied. Also, when the gas permeability coefficient k is in the above range, the pressure loss is not so sensitive to a change of the gas permeability coefficient k. When the gas permeability coefficient k is selected as a management parameter, a decreasing of characteristics of the honeycomb structure by a change in management value of the management parameter can be avoided to some extent.

Also, the present invention can be applied to the honeycomb structure provided with the catalyst and the catalyst carrying layer, and the catalyst and the catalyst carrying layer may be provided on the cell wall.

Usually, when the catalyst carrying layer is provided on the cell wall, the gas permeability coefficient k is decreased corresponding to a provided amount of the catalyst carrying layer. Here, in the case of the honeycomb structure provided the catalyst carrying layer with 40 g or more against an appearance capacity 1 L of the honeycomb structure, it is preferable that the gas permeability coefficient k of the cell wall before providing the catalyst carrying layer be 1.0 $\mu m^2$ or more. Thereby, it is possible that the catalyst amount provided on the honeycomb structure is within a desired variation range and without carrying surplus catalyst, so that the quantity of use of a noble metal can be reduced and manufacturing cost can be reduced. Also, the appearance capacity is a capacity that includes all of pores of a sample (open pore and closed pore) and apertures.

For the present invention, the gas permeability coefficient of the cell wall as the parameter defining characteristics of the honeycomb structure is used and the gas permeability coefficient is controlled within a range of predetermined values; thereby, the honeycomb structure having the low pressure loss and the high capture efficiency can be provided.

## BRIEF DESCRIPTION OF THE DRAWINGS

Other objects, features and advantages of the present invention will become more apparent from the following detailed description when read in conjunction with the accompanying drawings, in which:

FIG. 1 is a conceptual diagram showing a relationship between the gas permeability coefficient and the pressure loss of the honeycomb structure;
FIG. 2 is a perspective view showing typically one example of the honeycomb structure of the present invention;
FIG. 3 is a perspective view showing typically porous ceramic composing the honeycomb structure of the present invention;
FIG. 4 is a sectional longitudinal view showing the porous ceramic of FIG. 3;
FIG. 5 is a sectional view showing typically one example of the exhaust gas purifying device of a vehicle having the honeycomb structure of the present invention;
FIG. 6 is a table for explaining about the manufacturing process of the honeycomb structure of the present invention;
FIG. 7 is a table for showing a relationship between a particles capture efficiency and a gas permeability coefficient using the honeycomb structure of the present invention;
FIG. 8 is a diagram for showing a relationship between the gas permeability coefficient and a range of adsorption rate of the honeycomb structure;
FIG. 9 is a graph for showing a relationship between gas permeability coefficient and pressure loss using the honeycomb structure of the present invention; and
FIG. 10 is a graph for showing a relationship between gas permeability coefficient and capture efficiency loss using the honeycomb structure of the present invention.

Explanation of reference numbers

10: a honeycomb structure
11: an adhesive layer
12: a coating layer (sealing material layer)
15: a ceramic block
20: a porous ceramic
21: a cell
22: a plug
23: a cell wall
70: an exhaust gas purifying device

## DETAILED DESCRIPTION OF THE PREFERRED EMBODIMENTS

The honeycomb structure of the present invention has a characteristic in that the gas permeability coefficient k of the cell wall is between 0.5 $\mu m^2$ and 1.5 $\mu m^2$. Here, the gas permeability coefficient k is a parameter which shows a degree of the passage when gas passes through the cell wall of the honeycomb structure, and the pressure loss ΔP (kPa) is shown as below formula (1) and a relationship shown in the following formula (1) is concluded.

$$\Delta P = \frac{\mu Q}{2V_{trap}}(a+w_s)^2\left[\frac{w_s}{ka}+\frac{8FL}{3a^4}\right]+\frac{2\zeta\rho Q^2(a+w_s)^4}{V_{trap}^2 a^2}\left(\frac{L}{a}\right)^2 \qquad \text{FORMULA (1)}$$

Here, Q is a gas flow quantity ($m^3/s$), $\mu$ is a gas moving viscosity, $V_{trap}$ is an effective honeycomb structure capacity ($m^3$), a is a cell width (m), $w_s$ is a cell wall thickness (m), L is an outer diameter of the honeycomb structure (m) and $\zeta$ is called a compression / expansion inertia loss coefficient and it is due to circulation cross-section area of gas changing in discontinuity in end surfaces of a honeycomb structure, a parameter mainly determined by an aperture rate of both edge surface and shape of the honeycomb structure, $\rho$ is a gas density (kg/ $m^3$) and F is a constant (28.454). Among these, $V_{trap}$, a, $w_s$, L and $\zeta$ are determined by the shape of the honeycomb structure, while $\mu$ and $\rho$ are uniformly determined by temperature and kind of gas.

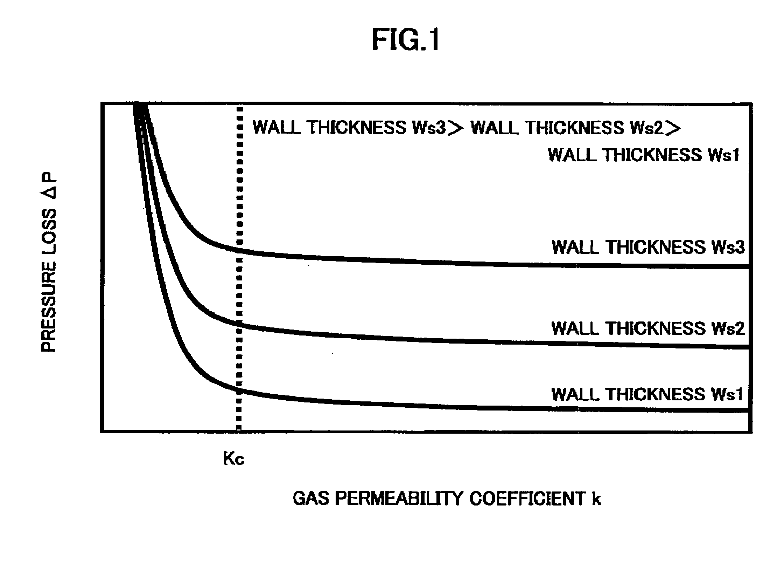

FIG. 1 shows a typical relationship between the gas permeability coefficient k and the pressure loss ΔP. The pressure loss is decreased as the gas permeability coefficient k is increased. The characteristics of the present invention are that a drastic change of the pressure loss as shown in the case where the gas permeability coefficient k is smaller than $k_c$ does not occur when the gas permeability coefficient k is beyond the predetermined value ($k_c$), and a change rate of the pressure loss is decreased. For region ($k \geqq k_c$) where the change rate of the pressure loss is controlled, when a characteristic of the honeycomb structure is managed by the parameter gas permeability coefficient k, it is suggested that a state with few changes of the pressure loss can be maintained in the honeycomb structure. In other words, when the gas permeability coefficient k is selected such that the pressure loss of the honeycomb structure is in the above region (that is, the lowest value of the gas permeability coefficient k is determined), even if the gas permeability coefficient k fluctuates to some extent, the influence that such a change gives to the pressure loss is small. Therefore, a problem of a conventional method to manage the characteristic of the honeycomb structure at the pore rate or the pore diameter is solved. The conventional problem is that a management parameter greatly fluctuates with a manufacturing step, a filter characteristic of the honeycomb structure after completion cannot be recognized, and desired filter performance is not provided by the honeycomb structure after completion.

However, when the honeycomb structure is used as the filter, the capture efficiency is nominated as the characteristic that the honeycomb structure requires other than the pressure loss. Thus it is necessary to consider relationships with the capture efficiency that is another important characteristic to influence the gas permeability coefficient k and the filter performance. It is generally expected that the capture efficiency of the honeycomb structure decreases when the gas permeability coefficient k grows big.

According to the above-mentioned consideration, as a result the inventers of present invention pushed forward a study zealously, the honeycomb structure which satisfies both low pressure loss and high capture efficiency can be provided when the gas permeability coefficient k is between 0.5 $\mu m^2$ and 1.5 $\mu m^2$. In this case, even if the management parameter such as the pore rate and the pore diameter that changes drastically are not used, a characteristic of the honeycomb structure can be controlled in a desired range by determining the range of the gas permeability coefficient k as described the above.

Also, it is preferable that the gas permeability coefficient k be between 0.5 $\mu m^2$ and 1.5 $\mu m^2$ in the case of the honeycomb structure provided the catalyst carrying layer and the catalyst. Especially, in the case of the honeycomb structure providing the catalyst carrying layer with 40 g or more against an appearance capacity 1 L of the honeycomb structure, it is preferable that early gas permeability coefficient k before providing the catalyst carrying layer be 1.0 $\mu m^2$ or more. Thereby, as described below, it is possible that the catalyst amount provided on the honeycomb structure is within a desired variation range and without carrying surplus catalyst, so that the quantity of noble metal used can be reduced and manufacturing cost can be reduced.

In the below, a description is given, with reference to the accompanying drawings, of an embodiment of the present invention.

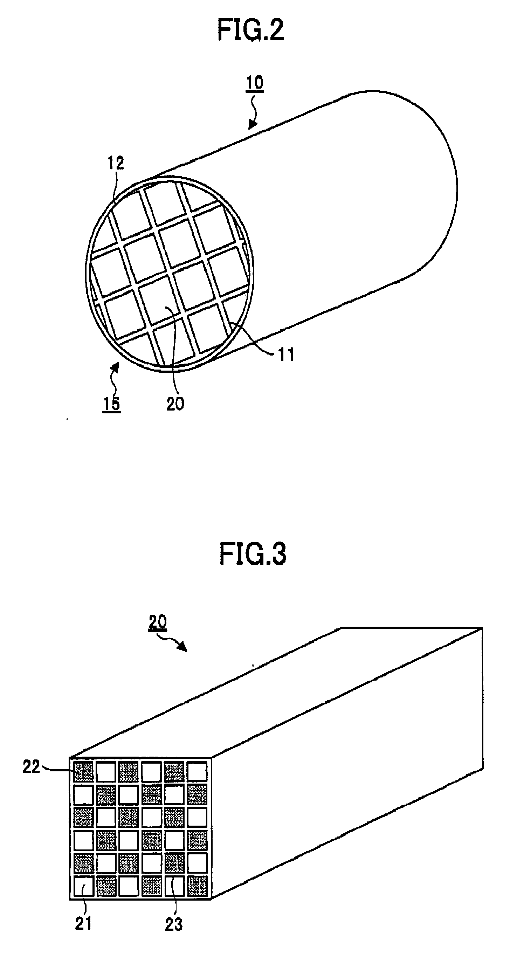

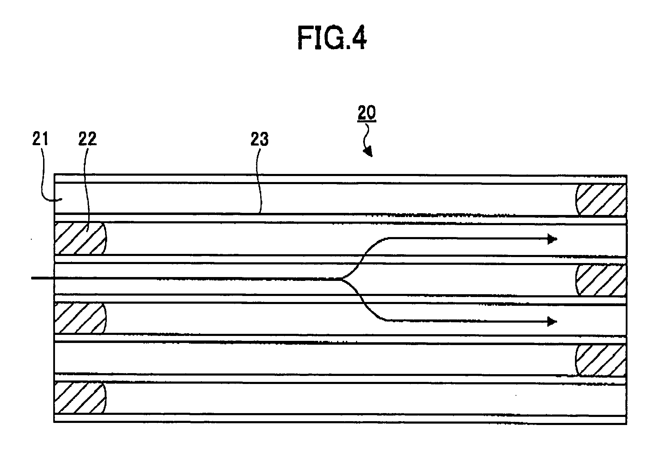

FIG. 2 is a perspective view showing one typical example of the honeycomb structure of the present invention. Also, FIG. 3 is a perspective view showing porous ceramic 20 composing the honeycomb structure shown in FIG. 2. Also, FIG. 4 is a sectional longitudinal view showing the porous ceramic 20 of FIG. 3.

As shown FIG. 2, the honeycomb structure 10 of the present invention is constructed such that plural porous ceramics 20 comprising silicon carbide are combined via an adhesive layer 11. After that, the porous ceramics 20 which are joined with the adhesive layer 11 are processed into a cylindrical shape, and a ceramic block 15 is constructed. Even more particularly, around this ceramic block 15, the coating layer (herein after, it is described as a sealing material layer) 12 is provided.

Also, for the honeycomb structure 10 shown in FIG. 2, the shape of this ceramic block 15 is cylindrical. However, in the present invention, if the ceramic block is pillar shaped, it need not be limited to a cylindrical shape, for example, it may be any shape such as cylindroid shape or rectangular-pillar shape.

As shown in FIG. 3 and FIG. 4, several cells 21 are aligned longitudinally in a porous ceramic 20, and the cell wall 23 which separates the cells 21 from each other performs as a filter. That is, as shown in FIG. 4, either inlet or exit of the cell 21 formed in the porous ceramic 20 is sealed with plug 22. Thereby, the exhaust gas introduced in any one of cells 21 is discharged from another cell 21 after the gas has passed through the cell wall 23 which separates the cells 21 by all means.

The honeycomb structure of the present invention is mainly comprising porous ceramic, and nitride ceramic such as aluminum nitride, silicon nitride, boron nitride and titanium nitride; carbide ceramic such as silicon carbide, zirconium carbide, titanium carbide, tantalum carbide and tungsten carbide; and oxide ceramic such as alumina, zirconia, cordielite, mullite, silica and aluminum titanate are nominated for materials for the porous ceramic. Also, the honeycomb structure 10 may be comprised of materials more than two kinds like composites with silicon and silicon carbide, or the like. When the composites with silicon and silicon carbide are used, it is desirable to add silicon to become 0-45 total percent by weight.

Among the above porous ceramics, silicon carbide base ceramic, which has high heat resistance, is superior in mechanical properties, and its better heat conductance is desirable. Also, the silicon carbide base ceramic means materials in which silicon carbide is included 60 percent by weight or more.

A particle size of the ceramic used when manufacturing the honeycomb structure 10 is not limited, but it is preferable to use powder having little shrinkage during the following firing process. For example, it is preferable to combine powder of 100 weight percent having average particle size of 0.3-50 $\mu$m with powder of 5-65 weight percent having average particle size of 0.1-1.0 $\mu$m.

It is preferable that a wall part (cell wall 23) and the plug 22 in the porous ceramic 20 comprise the same porous ceramic. Thereby, adhesion strength of both can be raised, by means of coordinating the pore rate of the plug 22 the same as the wall part (cell wall 23). Integrity with an expansion coefficient of the wall part (cell wall 23) and an expansion coefficient of the plug 22 can be planned, also the occurrence of a gap between the plug 22 and the wall part (cell wall 23), and the occurrence of a crack at the plug 22 and the wall part (cell wall 23) contacting the plug 22 by means of stress at production time and at the time of use can be prevented. Also, wall part means both the cell wall which separates the cells 21 from each other and an outer peripheral portion of the porous ceramic 20.

A thickness of the plug 22 is not limited, but for example, it is preferable that the thickness be between 1 and 20 mm and more preferable between 3 and 10 mm when the plug is comprising the porous silicon carbide.

A thickness of the cell wall 23 is not limited, but it is preferable that the desirable lowest limit be 0.1 mm and the desirable highest limit be 0.6 mm. When the thickness is less than 0.1 mm, the strength of the honeycomb structure is not enough and when the thickness is more than 0.6 mm, the pressure loss rises.

For the honeycomb structure 10 of the present invention, the adhesive layer 11 is formed between porous ceramics 20, and it functions as an adhesive binding several porous ceramics 20 to each other. The sealing material layer 12 is formed on the outside surface of the ceramic block 15. When the honeycomb structure 10 is provided on an exhaust path of the internal combustion engine, the sealing material layer 12 functions as the plug to prevent the exhaust gas which passed through the cell from the outside surface of the ceramic block 15 from leaking out. Also, the sealing material layer 12 functions as a reinforcing structure.

Also, for the porous ceramic 20, the adhesive layer 11 and the sealing material layer 12 may be same material or different material. In addition, when the adhesive layer 11 and the sealing material layer 12 are of the same material, the combination ratio of the materials may be the same ratio or different ratio. Moreover, the adhesive layer 11 and the sealing material layer 12 may have denseness or be porous, but when seal characteristics are regarded as important, it is preferable to have denseness.

Materials comprising the adhesive layer 11 and the sealing material layer 12 are not limited to these, but materials which are composed of inorganic binder, organic binder, inorganic fiber and/or inorganic particle can be used, for example.

For the inorganic binder, silica sol, alumina sol and the like can be used, for example. These may used alone, and when more than two kinds are mixed, it may be used. Among the inorganic binders, silica sol is preferable.

For the organic binder, polyvinyl alcohol, methyl cellulose, ethyl cellulose and the like can be used, for example. These may used alone, and when more than two kinds are mixed, the mixture may be used.

For the inorganic fiber, ceramic fiber such as silica-almina, mullite, alumina and silica can be used, for example. These may used alone, and when more than two kinds are mixed, the mixture may be used. Among the inorganic fibers, silica-alumina fiber is preferable.

For the inorganic particles, carbide, nitride and the like can be used, for example, inorganic powder comprising silicon carbide, a silicon nitride, a boron nitride or a whisker can be used, especially. These may used alone, and when more than two kinds are mixed, the mixture may be used. Among the inorganic particle, silicon carbide which is superior in heat conductance is preferable.

Also, for an aperture making agent such as a balloon which is a fine hollow globe which component is an oxide family ceramic, spherical acrylic particles and graphite may be added in a paste used for forming the adhesive layer and the sealing material layer, if necessary.

The balloon material is not limited to these, but alumina balloon, glass micro balloon, silas balloon, fly ash balloon, mullite balloon and the like can be used, for example. Among the balloons, alumina balloon is preferable.

Such honeycomb structure 10 can be used as a filter (diesel particulate filter: DPF) which captures particulate matter in the exhaust gas.

Also, a catalyst may be provided on the honeycomb structure 10.

When the catalyst is provided on the honeycomb structure 10, it is preferable that the cell wall be coated with the catalyst carrying layer. Thereby, specific surface area is increased, the ability to disperse the catalyst is raised, and a reaction region of the catalyst can be increased.

For example, oxide ceramic such as alumina, titania, zirconia, silica, and seria are nominated for the catalyst carrying layer.

Also, the catalyst provided on the catalyst carrying layer is not limited to these, but a preferable catalyst is one that is able to convert harmful gas components in the exhaust gas such as CO, HC and NOx and that is able to reduce these components efficiently by decreasing the active energy for burning of particulate matter and make it easy to burn. For example, noble metals such as platinum, palladium and rhodium can be nominated. Also, compounds including an alkali metallic element, alkaline earth metallic element, rare-earth element, transition metal element and the like may be carried.

Thus, when the catalyst carrying layer is provided on the honeycomb structure 10 and the catalyst is carried on the catalyst carrying layer, the honeycomb structure 10 functions as the filter to capture particulate matter in the exhaust gas and also functions as a catalytic converter for converting CO, HC, NOx and the like included in the exhaust gas.

In the above, characteristics of the present invention are described with an example of the honeycomb structure as shown in FIG. 2 constructed via the adhesive layer 11 bonding several porous ceramics 20. However, the present invention can be applied to other kinds of honeycomb structure, that is, one honeycomb structure that it is unified, and the external form as shown in FIG. 2 is formed, and is manufactured without using the adhesive layer. Hereinafter, such a honeycomb structure is described as [the integral honeycomb structure]. Also, the honeycomb structure of a model to join plural porous ceramics 20 through the above-mentioned adhesive is described as [a joined type honeycomb structure]. In this case, first of all, an extrusion molding is performed by using a material paste whose main component is ceramic, and a ceramic molded body having several cells which is the base for the above-mentioned ceramic block is manufactured. Next, after drying this molded body, the plug is filled up either end of each cell and the cell is sealed. Also, in such a method, the integral honeycomb structure which is the same structure as the joined type honeycomb structure shown in FIG. 2 can be obtained.

Next, one example of the manufacturing method of the joined type honeycomb structure of the present invention is described.

First of all, an extrusion molding is performed by using a material paste whose main component is the above-mentioned ceramic, and a ceramic molded body having the square-pillar shape is manufactured.

The material paste is not limited, but the material paste where the pore rate of the honeycomb structure after production becomes 40-75% is preferable, for example. Also, the material paste may be that a binder, a dispersion solvent and the like are added into powder comprising ceramic as described above.

The particle size of the ceramic powder is not limited to these, but it is preferable to use powder having little shrinkage in the following process. For example, it is preferable to combine powder of 100 weight percent having average particle size of 0.3-50 $\mu$m with powder of 5-65 weight percent having average particle size of 0.1-1.0 $\mu$m.

The binder is not limited to these, but methyl cellulose, carboxymethylcellulose, hydroxyethylcellulose, polyethylene glycol and the like can be used, for example.

It is desirable that the quantity of combination of the binder is usually 1-10 weight percent as against 100 weight percent of ceramic powders.

The dispersion solvent is not limited to these, but organic solvent such as benzene, alcohol like methanol and water can be used, for example. As for the dispersion solvent, it is blended to an appropriate amount so that the viscosity of material paste is within a predetermined range.

These ceramic powders, a binder and a dispersion solvent are mixed with atoliters, and after kneading the mixture in a kneader enough, the ceramic block is formed by the extrusion molding.

A molding assistant may be added to materials of the paste if necessary.

The molding assistant is not limited to these, but ethylene glycol, dextrin, fatty acid, fatty acid soap, polyvinyl alcohol and the like can be used, for example.

Also, an aperture making agent such as the balloon which is the fine hollow globe which component is oxide family ceramic, spherical acrylic particle and graphite may be added to the material of the paste, if necessary.

Next, the molded body of ceramic formed by the extrusion molding is dried by means of using a micro dryer, hot-air drier, dielectric dryer, decompression dryer, vacuum dryer and freeze dryer, and a ceramic drying body can be obtained. Then, for the both end surfaces of the ceramic drying body, a predetermined amount of the plug paste is filled in the end of the predetermined cell, and either end of each cell is sealed.

The plug paste is not limited to these, but the plug paste where the pore rate of the plug formed after the following process becomes 30-75% is preferable, for example, the same paste as the material paste may be used.

Next, as against the ceramic drying body which is filled with the plug paste, porous ceramic 20 can be manufactured by degreasing (for example, at 200-500 degrees Celsius) and firing (for example, at 1400-2300 degrees Celsius) in a predetermined condition. Conditions for degreasing and firing of the ceramic drying body can apply what is used when filters comprising conventional ceramic are manufactured.

Next, after having applied the adhesive paste which will become the adhesive layer 11 later to four sides of the porous ceramic 20 with uniform thickness, on this adhesive paste layer other ceramics 20 are laminated sequentially. This process is repeated, and the porous ceramic joining body of desired dimensions is manufactured.

Also, the above material paste or the plug paste can be used for the material comprising the adhesive paste.

Next, this porous ceramic joining body is heated, the adhesive paste is dried and fixed, then the adhesive layer 11 is formed, and each porous ceramic 20 is solidified.

Next, the porous ceramic joining body is cut and processed by using a diamond cutter, and a cylindrical ceramic block 15 having a predetermined outer diameter is manufactured.

Also, the sealing material paste (coating paste) is applied to the outer circumferential side of the ceramic block 15, and a drying process and a solidifying process are performed, then the sealing material layer 12 is formed. After such a process, cylindrical joined type honeycomb structures which are bonded with several porous ceramics 20 via the adhesive layer 11 can be manufactured.

Also, the integral honeycomb structure can be manufactured by an approximately similar process. In this case, the ceramic molding body formed by the extrusion molding with a shape near to the final shape is dried after the predetermined ends of the predetermined cells ares sealed, the degreasing process and firing process are performed directly, and thereby the integral honeycomb structure can be obtained.

Also, the catalyst such as a noble metal may be provided on the honeycomb structure of the present invention.

When the catalyst is provided on the honeycomb structure, first of all, the catalyst carrying layer such as aluminum is provided. As for a method forming the catalyst carrying layer on the honeycomb structure, for example, there is a method where the honeycomb structure is dipped in a solution including the alumina powder; after having raised the honeycomb structure, then this honeycomb structure is heated. After that, the honeycomb structure is dipped in a solution such as $Ce(NO_3)_3$, and a rare-earth element may be impregnated in the catalyst carrying layer.

As for a method providing the catalyst on the catalyst carrying layer, for example, a method where the ceramic firing body having the catalyst carrying layer is dipped in a solution of dinitro-dianmine platinum nitric acid ($[Pt(NH_3)_2(NO_2)_2]HNO_3$) and is heated is utilized.

As for other method, the honeycomb structure is dipped in alumina slurry carrying platinum for 2 minutes, after having raised the honeycomb structure, then this honeycomb structure is heated at 500 degrees Celsius, and the platinum catalyst can be provided.

Otherwise, an oxide catalyst such as $CeO_2$-$ZrO_2$ mixture, $CeO_2$-$CuO_2$ mixture, $CeO_2$-$FeO_2$ mixture or $LaCoO_3$ may be provided on the honeycomb structure. When $CeO_2$-$ZrO_2$ mixture as the oxide catalyst is carried on the honeycomb structure, the honeycomb structure is dipped into the solution including 10g of CZ($nCeO_2 \cdot mZrO_2$), 40 ml of water and appropriate amount of pH adjuster, and after the honeycomb structure is taken out from the solution, then the method, in which the honeycomb structure is fired at 500 degrees Celsius, is used.

When $LaCoO_3$ as the oxide catalyst is carried on the honeycomb structure, 0.01 mol of $La(NO_3)_3 \cdot 6H_2O$, 0.01 mol of $Co(CH_3COO)_2 \cdot 4H_2O$, 0.024 mol of $C_6H_8O_7 \cdot H_2O$ (citric acid) are added into ethanol with 20 ml respectively, and a solution which is mixed and stirred is used. After dipping the honeycomb structure in this solution, and having raised it out, the extra sol is absorbed, and it is removed, and it is dried at 100 degrees Celsius and fired at 600 degrees Celsius for one hour, thereby the honeycomb structure which carries as a catalyst $La(NO_3)_3$ can be obtained.

In the case of the integral honeycomb structure, the catalyst can be provided by the above process after the honeycomb structure is manufactured. On the other hand, in the case of the joined type honeycomb structure, it is noted that the catalyst may be provided in any step after the porous ceramic 20 is manufactured.

A use of the honeycomb structure manufactured in this way is not limited in particular, but it can be applied to the exhaust gas purifying device of vehicles.

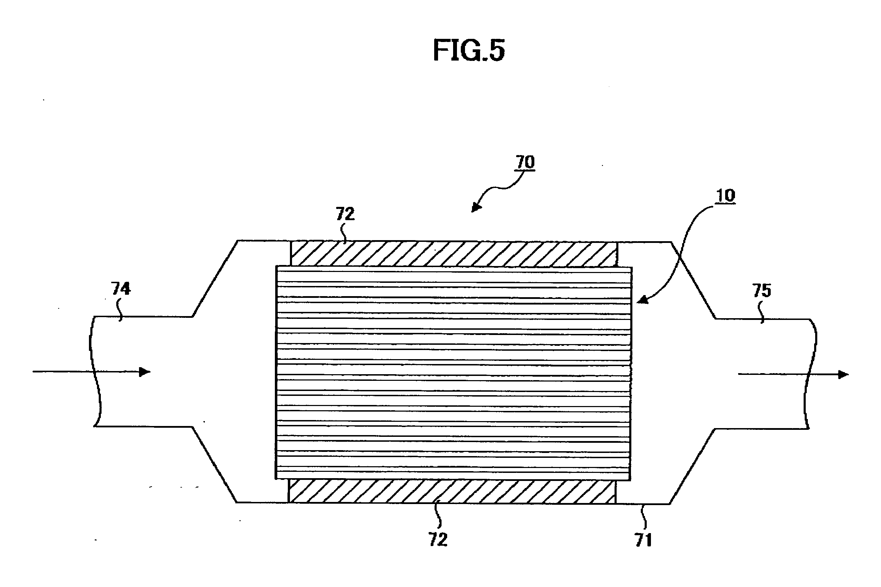

FIG. 5 shows one typical example of the exhaust gas purifying device which is provided with the honeycomb structure of the present invention.

As shown in FIG. 5, the exhaust gas purifying device 70 is mainly composed of the honeycomb structure 10, a casing 71 covering the outer surface of the honeycomb structure and a holding sealer (mat) 72 provided between the honeycomb structure 10 and the casing 71, an introducing tube 74 which is coupled to the internal combustion engine is connected to an end of the casing 71 through which the exhaust gas is introduced, and a discharge tube 75 which is coupled to outside of the device is connected to the other end of the casing 71. In FIG. 5, an arrow shows the flow of the exhaust gas.

In the exhaust gas purifying device 70 as constructed above, the exhaust gas which is discharged from the internal combustion engine is introduced into the casing 71 via the introducing tube 74, and the exhaust gas flows into the honeycomb structure 10 via the cells whose ends facing the introducing tube 74 of are opened. After the exhaust gas flows into the honeycomb structure 10 and passes through the cell wall, the particulate matter is captured by the cell wall and the exhaust gas is purified, the exhaust gas flows from the honeycomb structure via cells whose ends of the different side from the above ends are opened. Finally, the purified gas is discharged by passing through the discharge tube 75. Also, in the case where the catalyst is provided on the honeycomb structure 10, harmful components in the exhaust gas such as CO, HC and NOx are converted when the exhaust gas passes through the cell wall.

[Examples]

A description is given below in more detail. The present invention is not limited to these experimental examples.

[Manufacturing of an examination body 1]

7000 wt% of $\alpha$-silicon carbide particles (7 $\mu$m in average particle size), 3000 wt% of $\alpha$-silicon carbide particles (0.5 $\mu$m in average particle size) and 550 wt% of the organic binder (methylcellulose) were mixed by dry mixing, thereby, a mixture composition was obtained.
Next, 330 wt% of a plasticizer (NOF Corp., UNILUB), 150 wt% of glycerin as a lubricant and water (appropriate amount) were added to the mixture composition, after having kneaded this mixture composition more, it was formed by the extrusion molding, and a rectangular pillar shaped raw molded body shown in FIG. 3 was obtained.
Next, the raw molded body was dried using the microwave dryer and the hot-air drier and made it into a ceramic drying body. After that, the plug paste which has the same composition as well as the above raw molded body was supplied in a predetermined cell.
Next, the drying process is performed again by using the hot-air drier, the degreasing was performed at 400 degrees Celsius with the drying body and the firing process was performed for 3 hours at 2200 degrees Celsius under Ar atmosphere of normal pressures, thereby, the porous ceramic 20 comprising a firing body of silicon carbide having a shape of 34.3 mm x 34.3 mm x 150 mm was manufactured. The number of cells of the porous ceramic 20 was 46.5 number of cells/cm$^2$ (300 cpsi) and actually, the thickness of all of the cell wall was 0.25 mm.
Next, lots of the porous ceramics 20 were adhered using the adhesive paste including 30 wt% of alumina fibers (0.2 mm in average fiber length), 21 wt% of silicon carbide particles (0.6 $\mu$m in average particle size), 15 wt% of silica sol, 5.6 wt% of carboxymethylcellulose and 28.4 wt% of water, then it was cut with a diamond cutter, thereby a cylindrical ceramic block 15 was manufactured.
Next, the same paste as the adhesive paste is coated on the outside surface of the ceramic block 15, thereby a sealing material layer having a thickness of 0.2 mm is formed. Also, the sealing material layer is dried at 20 degrees Celsius and made to solidify, thereby, finally, a cylindrical honeycomb structure having a diameter of 143.8 mm x a length of 150 mm was manufactured. This honeycomb structure was set as the examination body 1.

[Manufacturing of an examination body 2-9]

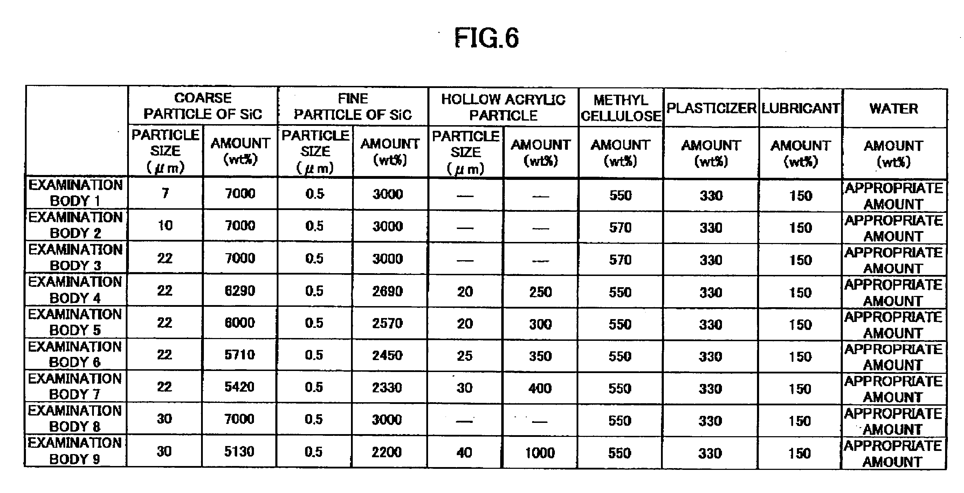

7000 wt% of $\alpha$-silicon carbide particles (10 $\mu$m in average particle size), 3000 wt% of $\alpha$-silicon carbide particles (0.5 $\mu$m in average particle size) and 570 wt% of the organic binder (methylcellulose) were mixed by dry mixing, and thereby, a mixture composition was obtained.
Next, 330 wt% of a plasticizer (NOF Corp., UNILUB), 150 wt% of glycerin as a lubricant and water (appropriate amount) were added to the mixture composition; after having kneaded this mixture composition more, it was formed by the extrusion molding, and a rectangular pillar shaped molded body shown in FIG. 3 was obtained. The honeycomb structure is manufactured from the molded body in the same process as the examination body 1. This honeycomb structure was set as the examination body 2.
In a like manner, when a molded body was manufactured, each composition to show in FIG. 6 was mixed, and a mixture composition was formed. By a method the same as the examination body 1, honeycomb structures of examination bodies 3-9 were manufactured except that the molded body was manufactured by means of extrusion molding. Also, only with examination bodies 4-7 and the examination body 9, the quantity as described in the table as hollow acrylic particles of particle size shown in FIG. 6, respectively, were added. The acrylic particles were added as the aperture making agent.

(Providing of the catalyst carrying layer)

For the above examination bodies 2-6, the alumina carrying layer of 20 g was provided against the appearance capacity 1 L of the honeycomb structure by the following processes. The providing amount of the catalyst carrying layer (the alumina carrying layer) shows as providing amount as opposed to the appearance capacity 1L of the honeycomb structure as follows. For example, it is written as "the alumina carrying layer of 20 g/L is provided".

$\alpha$-alumina was added to water and a dispersing agent (nitric acid solution) and these were mixed, the mixture was powdered for 24 hours, and thereby a slurry including alumina of average particle size of 2 $\mu$m was prepared. Next, each examination body was dipped into the obtained slurry, and after having raised them, each examination body was dried at 200 degrees Celsius. This process is repeated until the alumina carrying layer provided to the examination body becomes 20 g/L. After this, this examination body was fired at 600 degrees Celsius. After such a process, examination bodies 2-6 for which the alumina carrying layer of 20 g/L was provided are referred to as examples 6-10, respectively.

Also, for the above examination bodies, the alumina carrying layer of 40 g/L was provided in the same process as examination bodies 3-6, and these examination bodies are referred to as examples 11-14, respectively.

Also, the alumina carrying layer of 60 g/L was provided in the same process as examination bodies 3-7, and these examination bodies are referred to as examples 15-19, respectively.

Also, the alumina carrying layer of 80 g/L was provided in the same process as examination bodies 8, 4, 5, 6 and 9, and these examination bodies are referred to as examples 20-24, respectively.

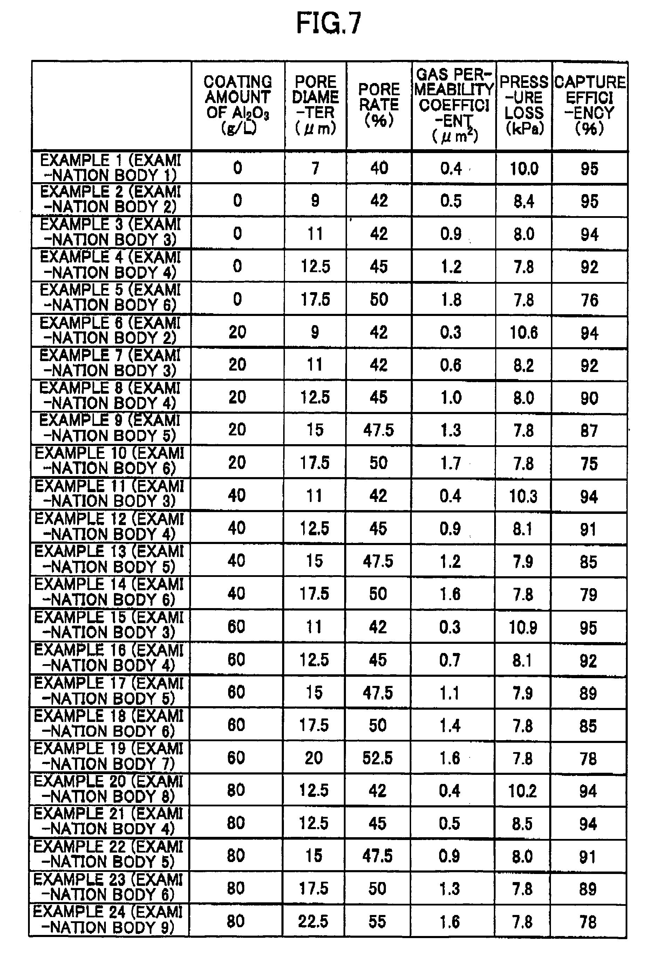

Also, the alumina carrying layer was not provided in examination bodies 1, 2, 3, 4 and 6, and these examination bodies are referred to as examples 1-5, respectively. Each providing amount of the alumina carrying layer of the honeycomb structure of examples 1-24 is shown in FIG. 7.

(Evaluation examination)

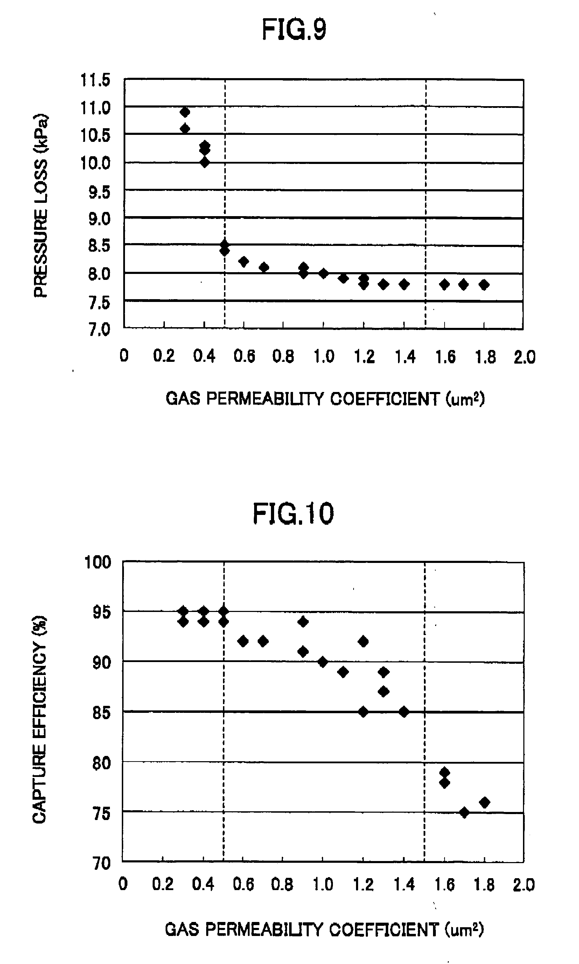

(1) The measurement of gas permeability coefficient
The gas permeability coefficient k of each honeycomb structure was measured. For the measurement, a sample which was manufactured by a manufacturing method that was different from each of the above-mentioned examples; that is the integral honeycomb structure sample which was formed by the extrusion molding in the shape of a cylindrical from the beginning was used. But even if the manufacturing methods were different, the same extrusion molding was processed using the same materials in the case of each of the above-mentioned examples, and samples were manufactured in the same firing condition. Thus, characteristics such as pore diameter of these samples are approximately similar in the case of each above-mentioned example. Also, a shape of the sample has a diameter of 25 mm and total length of the sample was 50 mm.
The gas permeability coefficient was measured as follows. First of all, as against each side of open end of the sample, a metallic tube having one end including an inner diameter which is almost the same as the circumference of the sample was attached, and a gap of a joint was sealed. Next, in the state that the metallic tube was attached at both ends, the sample is placed on a test bed so that a cylindrical axis of the sample becomes approximately level. Next, in the state that made air flow in from the open end side (inlet side) of an either metallic tube and made drain air from the other open end (outlet side) of the metallic tube, the difference in pressure of air $\Delta$P between the inlet side and the outlet side of the metallic tube were measured. Also, the measurement was performed as against 20 points of air mass flow such that air mass flow Q which made the sample flow in was changed in the range of 0-80 L/min by using a massflow meter. 20 points of obtained data were plotted in a graph in which Q is assumed as a horizontal axis and $\Delta$P/Q is as a vertical axis. Then, the gas permeability coefficient was calculated from an intercept of a straight line between plots (more precisely, by formula 1, the intercept of the straight line becomes C/k, and c is the constant). Also, the measurement was performed at room temperature. The result is shown in FIG. 7.
(2) The measurement of average pore diameter and pore rate
Before placing the catalyst carrying layer, a pore distribution was measured in the range of 0.1-360 $\mu$m of the pore diameter by means of a mercury injection method for the honeycomb structure of each of the examination bodies 1-9 with a porosimeter (Shimadzu Corp., AutoPore III 9420). Average pore diameter and pore rate of each examination body was obtained by this measurement. The obtained result were classified as examples 1-24, and are shown in FIG. 7.
(3) The measurement of the pressure loss
The honeycomb structure of each of examples 1-24 was placed on the exhaust path of the engine, and air was supplied at 750 m$^3$/h in speed, and each pressure loss of the honeycomb structure was measured. The results are shown FIG. 7 and FIG. 9.
As shown in FIG. 7 and FIG. 9, for the honeycomb structure having the gas permeability coefficient k to satisfy the relations where the gas permeability coefficient k is between 0.5 $\mu m^2$ and 1.5 $\mu m^2$, the pressure loss was low. In contrast, for the honeycomb structure whose gas permeability coefficient k is less than 0.5 $\mu m^2$ (examples 1, 6, 11, 15 and 20), the pressure loss was high and it was beyond 10 kPa.

(4) The measurement of the capture efficiency.

The honeycomb structure of each of examples 1-24 was placed on the exhaust path of the engine, and the capture efficiency of the honeycomb structure was measured. The capture efficiency was measured as follows. A diesel engine of 2 liters was driven under conditions of a rotation of 2000 rpm, and a torque of 47 N•m. Exhaust gas discharged from the engine by such a driving is distributed to the honeycomb structure. The amount of PM (P0) in exhaust gas before it flows into the honeycomb structure and the amount of PM (P1) in the exhaust gas which has passed through the honeycomb structure were measured by a PM counter. From the obtained result, the capture efficiency is calculated as the capture efficiency (%) =( P0-P1) /P0x100.

The result is shown in FIG. 7 and FIG. 10. As shown in FIG. 7 and FIG.10, for the honeycomb structure having the gas permeability coefficient k to satisfy the relations where the gas permeability coefficient k is between 0.5 $\mu m^2$ and 1.5 $\mu m^2$, the capture efficiency was high. In contrast, for the honeycomb structure where gas permeability coefficient k is more than 1.5 $\mu m^2$ (examples 5, 10, 14, 19 and 24), the capture efficiency was bad and it was under 80%. Here, in this specification, a value of early stage of capture efficiency (exhaust gas is distributed to the honeycomb structure in a state of a new article or a state of mint condition, and it is a value of the capture efficiency that began capture just after that) is used for the evaluation.

(5) The measurement of the absorption rate

Next, the absorption rate (water absorption) was measured for the honeycomb structure of examination bodies 1-9 (before placing the catalyst carrying layer). The absorption rate is an index that degree of liquid holding in a honeycomb structure is evaluated. This value of the absorption rate tends to a large change for the honeycomb structure where there are a lot of fine pores. As the reason for this, it is thought that the reason is because those pores hold liquid and liquid is not held for the honeycomb structure where there are a lot of fine pores. The measurement of the absorption rate was performed as follows. First of all, sample weight in a dry state was measured. Next, dipping can completely place a sample underwater, after having reversed the sample underwater, the sample was raised from the water, and water falling from the sample was dropped lightly. Next, the wet sample is placed in an aspirator (vacuum system), the absorption test was performed in a condition where amount of wind is 4.4 $m^3$/min and absorption pressure is 9.8 kPa, and the sample weight after absorption was measured. By means of dividing a weight difference of the sample between this value and a weight at the dry state in an early stage (dry time) of weight, the amount of absorption of the sample is obtained.

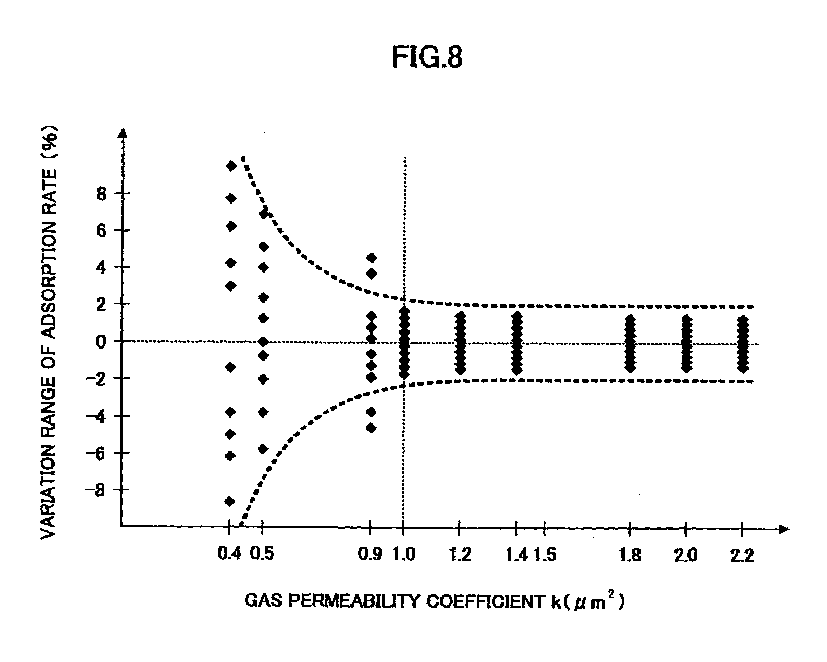

Variation of a value of absorption rate when the above-mentioned measurement was repeated ten times, respectively, is shown against the gas permeability coefficient k for each examination body (before placing the catalyst carrying layer) in FIG. 8. Each point presented variation of absorption rate by each gas permeability coefficient at percentage and a curve of a dotted line is the additional line which is added to indicate a size of variation (a change) of absorption rate clearly. When the gas permeability coefficient k is less than 1.0, the variation of values of absorption rate was drastically increased. As the reason for this, when the gas permeability coefficient k becomes too small, fine pores included in the honeycomb structure increase; it is thought that the reason is because of the tendency that fine pores are placed on the catalyst carrying layer and fine pores are not placed on the catalyst carrying layer becomes remarkable. As for the catalyst, the amount of catalyst fluctuates by an placement state of the catalyst carrying layer greatly so that it is placed on the catalyst carrying layer. Thus, it means that the change of the placement state of the catalyst carrying layer is great where the variation of values of absorption rate is great, and it is unfavorable so that it is thought that this leads to a fluctuating amount of application of an expensive catalyst. From such a point of view, especially for the honeycomb structure carrying the catalyst, it is preferable that the gas permeability coefficient k in a step before placing the catalyst carrying layer be in the range 1.0 or more.

The present invention is not limited to the specifically disclosed embodiment, and variations and modifications may be made without departing from the scope of the present invention.

Industrial applicability

According to the present invention, a filter which removes particulate matter included in exhaust gas discharged from internal combustion engines such as diesel engines and the honeycomb structure which is used as catalyst carriers by the filter can be provided; and in more detail, the gas permeability coefficient of the cell wall as the parameter defining the characteristics of the honeycomb structure is used, the gas permeability coefficient is controlled within a predetermined range, and thereby the honeycomb structure has low pressure loss and high capture efficiency.

The present application is based on Japanese Priority Application No.2006-047348 filed on February 23, 2006 and PCT/JP2006/316748 filed on August 25, 2006.

**Claims**

1.  A honeycomb structure comprising a porous ceramic which is composed of several cells aligned across a cell wall longitudinally, the cell having either one end sealed, in which a gas permeability coefficient k of the cell wall is between 0.5 $\mu m^2$ and 1.5 $\mu m^2$.

2.  The honeycomb structure as claimed in claim 1, **characterized in that** a catalyst carrying layer and a catalyst are placed on the cell wall.

3.  The honeycomb structure as claimed in claim 2, **characterized in that** the catalyst carrying layer is provided with 40 g or more against an appearance capacity 1 L of the honeycomb structure, and
    the gas permeability coefficient k in a step before placing the catalyst carrying layer is in the range 1.0 $\mu m^2$ or more.

4.  The honeycomb structure as claimed in any of claims 1 through 3, **characterized in that** the porous ceramic comprises at least one selected from the group consisting of aluminum nitride, silicon nitride, boron nitride, titanium nitride, silicon carbide, zirconium carbide, titanium carbide, tantalum carbide, tungsten carbide, alumina, zirconia, cordielite, mullite, silica and aluminum titanate.

5.  The honeycomb structure as claimed in any of claims 2 through 4, **characterized in that** the catalyst carrying layer comprises at least one selected from the group consisting of alumina, titania, zirconia, silica and ceria.

6.  The honeycomb structure as claimed in any of claims 2 through 5, **characterized in that** the catalyst comprises at least one selected from the group consisting of platinum, palladium and rhodium.

7.  The honeycomb structure as claimed in any of claims 2 through 6, **characterized in that** the catalyst is a compound including any one of an alkali metallic element, an alkaline earth metallic element, a rare-earth element and a transition metal element.

# FIG.1

WALL THICKNESS Ws3> WALL THICKNESS Ws2>
WALL THICKNESS Ws1

WALL THICKNESS Ws3

WALL THICKNESS Ws2

WALL THICKNESS Ws1

PRESSURE LOSS $\Delta P$

Kc

GAS PERMEABILITY COEFFICIENT k

EP 1 826 370 A1

# FIG.2

# FIG.3

# FIG.4

# FIG.5

EP 1 826 370 A1

# FIG.6

| | COARSE PARTICLE OF SiC | | FINE PARTICLE OF SiC | | HOLLOW ACRYLIC PARTICLE | | METHYL CELLULOSE | PLASTICIZER | LUBRICANT | WATER |
|---|---|---|---|---|---|---|---|---|---|---|
| | PARTICLE SIZE ($\mu$m) | AMOUNT (wt%) | PARTICLE SIZE ($\mu$m) | AMOUNT (wt%) | PARTICLE SIZE ($\mu$m) | AMOUNT (wt%) | AMOUNT (wt%) | AMOUNT (wt%) | AMOUNT (wt%) | AMOUNT (wt%) |
| EXAMINATION BODY 1 | 7 | 7000 | 0.5 | 3000 | — | — | 550 | 330 | 150 | APPROPRIATE AMOUNT |
| EXAMINATION BODY 2 | 10 | 7000 | 0.5 | 3000 | — | — | 570 | 330 | 150 | APPROPRIATE AMOUNT |
| EXAMINATION BODY 3 | 22 | 7000 | 0.5 | 3000 | — | — | 570 | 330 | 150 | APPROPRIATE AMOUNT |
| EXAMINATION BODY 4 | 22 | 6290 | 0.5 | 2690 | 20 | 250 | 550 | 330 | 150 | APPROPRIATE AMOUNT |
| EXAMINATION BODY 5 | 22 | 6000 | 0.5 | 2570 | 20 | 300 | 550 | 330 | 150 | APPROPRIATE AMOUNT |
| EXAMINATION BODY 6 | 22 | 5710 | 0.5 | 2450 | 25 | 350 | 550 | 330 | 150 | APPROPRIATE AMOUNT |
| EXAMINATION BODY 7 | 22 | 5420 | 0.5 | 2330 | 30 | 400 | 550 | 330 | 150 | APPROPRIATE AMOUNT |
| EXAMINATION BODY 8 | 30 | 7000 | 0.5 | 3000 | — | — | 550 | 330 | 150 | APPROPRIATE AMOUNT |
| EXAMINATION BODY 9 | 30 | 5130 | 0.5 | 2200 | 40 | 1000 | 550 | 330 | 150 | APPROPRIATE AMOUNT |

EP 1 826 370 A1

# FIG.7

| | COATING AMOUNT OF Al₂O₃ (g/L) | PORE DIAME -TER (μm) | PORE RATE (%) | GAS PER- MEABILITY COEFFICI -ENT (μm²) | PRESS -URE LOSS (kPa) | CAPTURE EFFICI -ENCY (%) |
|---|---|---|---|---|---|---|
| EXAMPLE 1 (EXAMI -NATION BODY 1) | 0 | 7 | 40 | 0.4 | 10.0 | 95 |
| EXAMPLE 2 (EXAMI -NATION BODY 2) | 0 | 9 | 42 | 0.5 | 8.4 | 95 |
| EXAMPLE 3 (EXAMI -NATION BODY 3) | 0 | 11 | 42 | 0.9 | 8.0 | 94 |
| EXAMPLE 4 (EXAMI -NATION BODY 4) | 0 | 12.5 | 45 | 1.2 | 7.8 | 92 |
| EXAMPLE 5 (EXAMI -NATION BODY 6) | 0 | 17.5 | 50 | 1.8 | 7.8 | 76 |
| EXAMPLE 6 (EXAMI -NATION BODY 2) | 20 | 9 | 42 | 0.3 | 10.6 | 94 |
| EXAMPLE 7 (EXAMI -NATION BODY 3) | 20 | 11 | 42 | 0.6 | 8.2 | 92 |
| EXAMPLE 8 (EXAMI -NATION BODY 4) | 20 | 12.5 | 45 | 1.0 | 8.0 | 90 |
| EXAMPLE 9 (EXAMI -NATION BODY 5) | 20 | 15 | 47.5 | 1.3 | 7.8 | 87 |
| EXAMPLE 10 (EXAMI -NATION BODY 6) | 20 | 17.5 | 50 | 1.7 | 7.8 | 75 |
| EXAMPLE 11 (EXAMI -NATION BODY 3) | 40 | 11 | 42 | 0.4 | 10.3 | 94 |
| EXAMPLE 12 (EXAMI -NATION BODY 4) | 40 | 12.5 | 45 | 0.9 | 8.1 | 91 |
| EXAMPLE 13 (EXAMI -NATION BODY 5) | 40 | 15 | 47.5 | 1.2 | 7.9 | 85 |
| EXAMPLE 14 (EXAMI -NATION BODY 6) | 40 | 17.5 | 50 | 1.6 | 7.8 | 79 |
| EXAMPLE 15 (EXAMI -NATION BODY 3) | 60 | 11 | 42 | 0.3 | 10.9 | 95 |
| EXAMPLE 16 (EXAMI -NATION BODY 4) | 60 | 12.5 | 45 | 0.7 | 8.1 | 92 |
| EXAMPLE 17 (EXAMI -NATION BODY 5) | 60 | 15 | 47.5 | 1.1 | 7.9 | 89 |
| EXAMPLE 18 (EXAMI -NATION BODY 6) | 60 | 17.5 | 50 | 1.4 | 7.8 | 85 |
| EXAMPLE 19 (EXAMI -NATION BODY 7) | 60 | 20 | 52.5 | 1.6 | 7.8 | 78 |
| EXAMPLE 20 (EXAMI -NATION BODY 8) | 80 | 12.5 | 42 | 0.4 | 10.2 | 94 |
| EXAMPLE 21 (EXAMI -NATION BODY 4) | 80 | 12.5 | 45 | 0.5 | 8.5 | 94 |
| EXAMPLE 22 (EXAMI -NATION BODY 5) | 80 | 15 | 47.5 | 0.9 | 8.0 | 91 |
| EXAMPLE 23 (EXAMI -NATION BODY 6) | 80 | 17.5 | 50 | 1.3 | 7.8 | 89 |
| EXAMPLE 24 (EXAMI -NATION BODY 9) | 80 | 22.5 | 55 | 1.6 | 7.8 | 78 |

FIG.8

# FIG.9

# FIG.10

**European Patent Office**

**EUROPEAN SEARCH REPORT**

Application Number

EP 06 02 7064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/029707 A1 (BEALL DOUGLAS M [US] ET AL) 12 February 2004 (2004-02-12)<br>* paragraphs [0010], [0031], [0032]; claims 23-26; tables 1,3 *<br>----- | 1-7 | INV.<br>F01N3/022 |
| X | US 2003/166450 A1 (KUMAZAWA KAZUHIKO [BE] ET AL) 4 September 2003 (2003-09-04)<br>* paragraphs [0013], [0014], [0023]; examples 3,8,12,13; table 3 *<br>----- | 1,2,4 | |
| X | WO 01/25166 A (CORNING INC [US]) 12 April 2001 (2001-04-12)<br>* claims 1,8,9,29,32,41,42; tables 1,2 *<br>----- | 1,4 | |
| X | US 2002/061811 A1 (MERKEL GREGORY A [US]) 23 May 2002 (2002-05-23)<br>* paragraph [0033]; claims 10,11,21,27,28; table 2 *<br>----- | 1,4 | |
| A | US 5 853 444 A (MAIER HORST R [DE] ET AL) 29 December 1998 (1998-12-29)<br>* the whole document *<br>----- | 1-7 | TECHNICAL FIELDS SEARCHED (IPC)<br><br>C04B<br>F01N<br>B01J |

The present search report has been drawn up for all claims

| Place of search | Date of completion of the search | Examiner |
|---|---|---|
| The Hague | 7 May 2007 | Focante, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 02 7064

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2007

| Patent document cited in search report | | Publication date | Patent family member(s) | | Publication date |
|---|---|---|---|---|---|
| US 2004029707 | A1 | 12-02-2004 | NONE | | |
| US 2003166450 | A1 | 04-09-2003 | AU | 6782801 A | 14-01-2002 |
| | | | CN | 1447781 A | 08-10-2003 |
| | | | EP | 1298112 A1 | 02-04-2003 |
| | | | WO | 0202479 A1 | 10-01-2002 |
| | | | JP | 2003040687 A | 13-02-2003 |
| WO 0125166 | A | 12-04-2001 | AU | 7858800 A | 10-05-2001 |
| | | | EP | 1235761 A1 | 04-09-2002 |
| | | | JP | 2003511332 T | 25-03-2003 |
| US 2002061811 | A1 | 23-05-2002 | NONE | | |
| US 5853444 | A | 29-12-1998 | AT | 222576 T | 15-09-2002 |
| | | | DE | 59609574 D1 | 26-09-2002 |
| | | | EP | 0796830 A1 | 24-09-1997 |
| | | | ES | 2180668 T3 | 16-02-2003 |
| | | | JP | 10015323 A | 20-01-1998 |
| | | | PT | 796830 T | 31-01-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002219319 A
- JP 2002357114 A
- JP 2006047348 A
- JP 2006316748 W